# EUROPEAN PATENT APPLICATION

(11) **EP 3 689 317 A1**
(43) Date of publication of application: **05.08.2020**
(21) Application number: 19425006.4
(22) Date of filing: 30.01.2019
(51) Int. Cl.: A61H 3/06, G01S 1/68, G09B 1/00, G09B 1/06

(54) **METHOD FOR PROVIDING AUDIO INFORMATION TO A VISUALLY IMPAIRED PERSON OR BLIND PERSON USING RADIO-FREQUENCY ELECTRONIC DEVICES AND RELATED SYSTEM**

(71) Applicant: TOOTEKO S.r.l., 30121 Venezia (IT)
(72) Inventor: D'Agnano, Fabio, 30121 Venezia (IT); Ruffato, Serena, 30121 Venezia (IT)
(74) Representative: Carangelo, Pierluigi

(57) **Abstract**

The present invention relates to a method (300) for providing audio information to a partially sighted/blind person using radio frequency electronic devices of an electronic system (1000). The system comprises:
- one or more identification devices (10) fastened to items of an environment, wherein each identification device comprises a radio frequency electronic device (2);
- a first portable electronic apparatus (20) configured to query the radio frequency electronic device of the identification devices;
- a second portable electronic apparatus (30) configured to communicate in a wireless mode with the first portable electronic apparatus.
The method comprises the following steps performed by the first portable electronic apparatus:
- detecting (301) a first unique identifier (ID1) of the radio frequency electronic device representative of an item accommodated in the environment;
- sending (302) to the partially sighted or blind person a notification signal of the successful detection of the radio frequency electronic device;
- generating (303) a first message (m1) including the first unique identifier and a second unique identifier (ID2) representative of the first portable electronic apparatus;
- transmitting (304) by radio broadcasting a first signal (S1) including the first message.
Furthermore, the method comprises the following steps performed by the second portable electronic apparatus:
- receiving (305) the first message (m1) transmitted with the first signal (S1);
- processing (306) the first message (m1) received to extract said first unique identifier (ID1) and second unique identifier (ID2);
- selecting (307) a first audio information representative of the item accommodated in the environment, starting from the first unique identifier (ID1) extracted, such first audio information being stored in a memory unit operatively associated with the second portable electronic apparatus (30).
In case the selecting step has a positive outcome, the first audio information is made available (308) to the partially sighted or blind person by means of the second portable electronic apparatus (30).

## Description

### Technical field

The present invention relates to a system and method for providing audio information to a partially sighted or blind person using radio frequency electronic devices for data transmission. In particular, but not by way of limitation, the invention relates to a method and system for providing audio information to a partially sighted or blind person in relation to items present along a path within an environment, by using radio frequency electronic devices associated with such items and which may be queried by a portable reading apparatus in a wireless mode.

### Prior art

Tactile signaling systems have long been known to provide information to partially sighted or blind persons about areas or environments, helping such persons to orient themselves and navigate by identifying specific items or paths within such environments. Such tactile signaling systems comprise manufactured articles having a face bearing embossed portions. For example, books of sheets of thermoformed plastic material are known, bearing Braille and legible characters on a face, or embossed plates of various material bearing Braille characters and/or embossed drawings.

Electronic devices are also known, operating through radio frequency, called labels or tags, which include logic microcircuits and are readable by query by means of an apparatus capable of emitting and receiving radio waves. The best-known tags are, for example, those operating according to RFID (Radio-Frequency IDentification) and NFC (Near-Field Communication) technologies.

Recently, interest in orientation and mobility assistance systems for partially sighted and blind persons which use such radio frequency technologies has increased. In particular, there have been attempts to make electronic systems available, for example, comprising devices operating through radio frequency, configured to inform a partially sighted or blind user about the position thereof or about the features of one or more items present in the surrounding environment.

In particular, the application of one or more radio frequency devices or tags on the outer surface of items has been suggested. Such tags may be read by a portable reading apparatus to provide information on the items to which they are associated. The reading apparatus may be connected, by means of Bluetooth technology, to a telematic network to provide a multimedia content, for example, an audio file, to a user, on the basis of a code contained in the tag applied on the surface of the item.

Since the readers employed transmit the information acquired by means of Bluetooth, such systems have the disadvantage of always requiring the execution of a mutual recognition process, known to those skilled in the art as pairing, which is implemented when two Bluetooth devices are connected to each other so as to authorize the exchange of data between such devices connected by means of Bluetooth.

Furthermore, such known systems have many limitations and are often inadequate to assist partially sighted and blind persons, as they are complex and do not improve, for such persons, the orientation and the recognition of items in a determined environment.

### Summary

It is the object of the present invention to devise and provide a method and a related system for providing audio information to a partially sighted or blind person using radio frequency electronic devices for data transmission, which allow to overcome, at least partially, the limitations and drawbacks of known solutions.

In particular, the system of the invention employs radio frequency electronic devices for data transmission, including RFID or NFC labels, and a first portable reading electronic apparatus which receives such data and is configured to increase the autonomous movement of the partially sighted or blind person and to facilitate the access to audio services provided.

In an operating mode, the audio message, in particular, for detecting items present in an environment, is transmitted to the partially sighted or blind person by means of a second portable apparatus, for example the smartphone of the partially sighted or blind person, who may listen to it directly without any mutual recognition or pairing operation between the aforesaid electronic apparatuses being required.

These and other objects are achieved by a method for providing audio information to a partially sighted or blind person using radio frequency electronic devices for data transmission according to claim 1, as well as a related electronic system in accordance with claim 14. Alternative embodiments of the method of the invention are defined in the dependent claims.

### Brief description of the drawings

Further features and advantages of the system and method of the invention for providing audio information to a partially sighted or blind person using radio frequency electronic devices for data transmission will become apparent from the following description of a preferred embodiment, given by way of explanation and not of limitation, with reference to the accompanying drawings, in which:
- **Figure 1** diagrammatically shows an example of the system for providing audio information to a partially sighted or blind person using radio frequency electronic devices for data transmission in accordance with the invention;
- **Figure 2** shows a block diagram of an example of a first portable electronic reading apparatus used in the system of Figure 1;
- **Figure 3** shows a flow diagram of a first embodiment of a method for providing audio information to a partially sighted or blind person performable by means of the system of Figure 1.

In the aforesaid Figures, equal or similar elements are indicated by same reference numerals.

### Detailed description

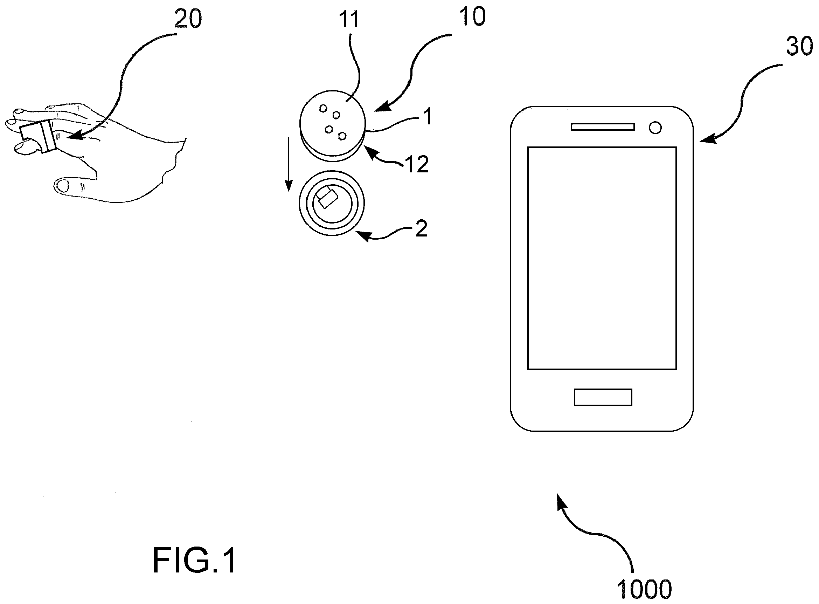

With reference to Figure 1, an electronic system for providing audio information to a partially sighted or blind person using radio frequency electronic devices for data transmission is overall indicated with reference numeral 1000.

In the following part of the description, the electronic system 1000 for providing audio information to a partially sighted or blind person using radio frequency electronic devices will be indicated, for brevity, as system for providing audio information or, more simply, as system.

The system 1000 comprises one or more identification devices 10 fastened, under operating conditions, to items accommodated in an environment.

In the following, the generic term environment will mean both a domestic environment, such as, for example, a room of a house, as well as a hall or a room of a public office, of a library, of a museum, of a restaurant or of any other environment different from the domestic environment.

In the example in which the aforesaid environment is a museum hall, the item identification devices are fastened to the works of art housed in the museum hall.

Each identification device 10 comprises a sheet 1 having a first surface or reading surface 11, which includes, for example, Braille embossed letters, adapted to be read by touch by the partially sighted or blind person. The aforesaid sheet 1 comprises a second surface 12 counterposed to such a reading surface 11.

A radio frequency electronic device, called label or tag 2, for example, of the RFID or NFC type, readable by means of radio waves, is associated with the sheet 1 of the identification device 10. For example, such a tag 2 may be applied to the second surface 12 of the sheet 1, opposite to the reading 11 one, or it may be incorporated in the sheet itself.

In a preferred embodiment shown in Figure 1, the tag 2 is applied to the second surface of the sheet 1 opposite to the reading 11 one.
Such a tag 2 is configured to store a first unique identifier ID1 code representative of the item of the environment on which the identification device 10 is fastened.

The system 1000 further comprises a first portable electronic apparatus 20 operating as a reading apparatus or reader to query the tags 2 of the devices 10 fastened on the items in a wireless mode.
Such a first portable electronic apparatus or reading apparatus 20, associated with the partially sighted or blind person, is configured to receive data transmitted by the tags 2 to enable generation of audio information to be provided to the partially sighted or blind person. In greater detail, such a reading apparatus 20 is configured to emit a radio query signal for each of the tags 2 and to receive in response from tag 2 the aforesaid first unique identifier ID1 code.

Such a portable reading apparatus 20 may be worn by the partially sighted or blind person. In particular, such a reading apparatus 20 is selected from the group consisting of: a ring having such a shape to be worn on a finger used for tactile reading; a glove; a smartwatch.

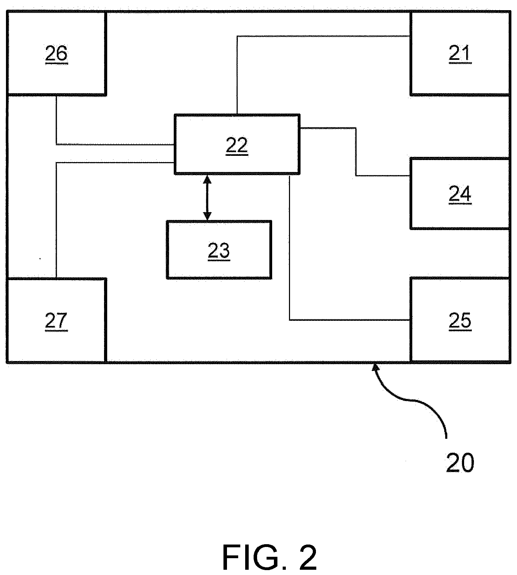

With reference to the block diagram of Figure 2, the portable reading apparatus 20 comprises a data receiving unit 21 configured to detect the first unique identifier ID1 code transmitted through radio frequency by the tag 2 of the item identification device 10. In an embodiment, such a receiving unit 21 includes an NFC decoder.

The reader 20 further comprises an electronic processing unit 22 or CPU (Central Processing Unit), for example, a microprocessor or microcontroller, configured to process data received from the receiving unit 21.

It should be noted that a memory unit 23 is operatively associated with the electronic processing unit 22. Such a memory unit 23 of the portable reader 20 comprises, for example, a service memory (RAM) and a system or mass storage (ROM).

It should be noted that the reading apparatus 20 is configured to store in the memory unit 23 code instructions of a first portion of a software for managing the method for providing audio information to a partially sighted or blind person of the invention.

The reading apparatus 20 further comprises a data transmission unit 24, controlled by the processing unit 22, configured for the transmission of data towards the outside of the reader itself 20 by means of a wireless connection and operating, for example, in accordance with the Bluetooth Beacon communication standard.

The reading apparatus 20 further comprises a capacitive sensor 25, a gyroscope/accelerometer unit 26 and a mechanical signaling unit, for example with vibration 27, each of which is connected and controlled by the electronic processing unit 22. In particular, the capacitive sensor 25 provides information on the fact that the reader 20 has been touched, i.e., it provides a functionality of the touch type to the apparatus.
In particular, the gyroscope/accelerometer module 26 is configured to generate representative data of specific movements or "gestures" performed by the hand of the partially sighted or blind person. The signaling unit with vibration 27 is adapted to return a mechanical signal, for example, a vibration, to the partially sighted or blind person following the occurrence of a specific event.

It should be noted that all the electronic units comprised in the portable reading apparatus 20 are powered by a battery (not shown in Figure 2 and, for example, removable and of a rechargeable type) housed in a compartment arranged in such an apparatus.

Such a reading apparatus 20 operates as a transmitter for the system 1000, to transmit, in a wireless mode, data received from the tag 2 of the item identification device 10 to a second electronic device 30 of the portable type associated with the partially sighted or blind person.

Such a second portable electronic apparatus 30 is embodied, for example, by a smartphone, a tablet or an audio guide. Below, for simplicity, reference will be explicitly made to the smartphone 30 associated with the partially sighted or blind person.

In an embodiment of the invention, such a second portable electronic apparatus or smartphone 30 is configured to store, in a respective memory, the abovementioned audio information, i.e., the audio messages, to be reproduced by means of the smartphone 30 itself upon the first unique identifier ID1 code associated with the tag 2 being received.

In greater detail, the smartphone 30 operates as a receiving device for the system 1000 and comprises a speaker unit controlled by a respective electronic processing unit. In particular, such a speaker unit is configured to convert each audio information into a respective voice message to be emitted towards the outside of the smartphone 30 itself.

In addition, the smartphone 30 is configured to store, in a respective memory unit, code instructions of a second portion of a software for managing the method for providing audio information to a partially sighted or blind person of the invention.

In a further embodiment of the invention, the electronic system 1000 further comprises a server apparatus (Core Server, not shown in Figure 1) operating in a cloud computing configuration and connectable to the smartphone 30 by means of a telematic network, for example, a Virtual Private Network (VPN).

In such an example, the audio information to be made available to the partially sighted or blind person, i.e., the audio messages, is stored in the server apparatus and sent to the smartphone 30 upon the first unique identifier ID1 code associated with the tag 2 to be played being received.

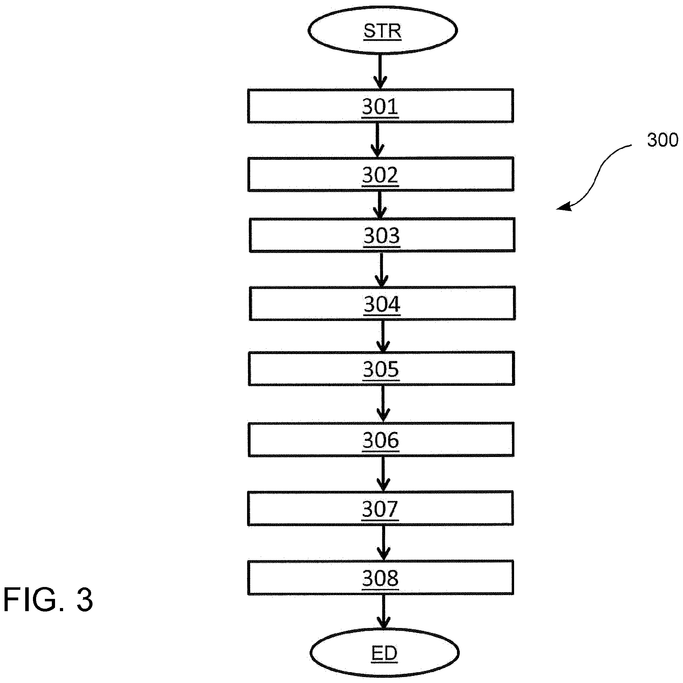

With reference to Figure 3, the operating steps of the method 300 for providing audio information to a partially sighted or blind person of the invention implemented by the electronic system 1000 are described in greater detail.

The method 300 comprises a symbolic starting step STR and a symbolic ending step ED.

In the more general embodiment, the method 300 for providing audio information to a partially sighted or blind person comprises a step of detecting 301, by means of the first portable electronic apparatus 20, a first unique identifier ID1 stored in the radio frequency electronic device 2 and representative of an item accommodated in the environment.

The method continues with a step of sending 302 to the partially sighted or blind person, by means of the first portable electronic apparatus 20, a notification signal of the successful detection of the radio frequency electronic device 2. In particular, the notification signal of the successful detection of the radio frequency electronic device 2 is a mechanical vibration of the first portable electronic apparatus 20.

Furthermore, the method 300 includes a step of generating 303, by means of the first portable electronic apparatus 20, a first message m1 including such a first unique identifier ID1 detected and a second unique identifier ID2 representative of the aforesaid first portable electronic apparatus 20.

Advantageously, the method comprises a step of transmitting 304, by radio broadcasting, by means of the first portable electronic apparatus 20, a first signal S1 including such a first message m1. In particular, such a transmission is in accordance with the Bluetooth Beacon standard.

In particular, such a step of transmitting 304 by radio broadcasting, the first signal S1 is performed with a frequency of 4 times per second.

In other words, the first signal is transmitted within a defined area, to be heard by all the devices in such an area.

The method proceeds with a step of receiving 305, by means of the second portable electronic apparatus 30, the first radio-broadcast signal S1 and the related first message m1, and of processing 306, by means of the second portable electronic apparatus 30 itself, the first message m1 received to extract the first unique identifier ID1 and the second unique identifier ID2.

From the moment it knows the second unique identifier ID2, the second portable electronic apparatus 30, i.e., the smartphone of the partially sighted or blind person, may establish a one-way communication with the first portable electronic apparatus 20 without requiring any authentication or pairing operation.

The method 300 further comprises a step of selecting 307 a first audio information representative of the item accommodated in the environment starting from the first unique identifier ID1 extracted. Such first audio information is stored in a memory unit operatively associated with the second portable electronic apparatus 30.

In case such a selecting step has a positive outcome, the method 300 includes a step of providing 308 to the partially sighted or blind person the first audio information by means of the second portable electronic apparatus 30. In particular, the smartphone converts the audio information into a respective voice message to be emitted towards the partially sighted or blind person by means of a speaker unit.

In a first particular embodiment of the method 300, the aforesaid first audio information is stored in a memory unit of the second portable electronic apparatus 30 and the step of selecting 307 the first audio information on the basis of the first unique identifier ID1 extracted is performed by the second portable electronic apparatus 30.

In a second particular embodiment of the method 300, the electronic system 1000 further comprises a server apparatus operating as cloud computing and connected to the second portable electronic apparatus 30 by means of a telematic network. In such a case, the first audio information is stored in a first memory unit of the server apparatus and the step of selecting 307 the first audio information on the basis of the first unique identifier ID1 extracted is performed by such a server apparatus. In other words, the server converts the audio information into a respective voice message which, once sent to the smartphone 30, is emitted towards the partially sighted or blind person by means of a speaker unit of such a smartphone.

In an embodiment, the method 300 comprises, before the step of receiving 305 the first signal S1, a step of enabling, by means of the second portable electronic apparatus 30, a dedicated wireless communication channel with the first portable electronic apparatus 20 on the basis of a selection, from a plurality of available identifiers, of the second unique identifier ID2 representative of the first portable electronic apparatus 20.

Thereby, the suggested method 300 allows to select, from all the signals sent by the transmitting apparatuses 20 present in an environment, only the one of interest. Obviously, a plurality of smartphones 30 may use the same selection and receive the same signals.

In an embodiment of the method, the aforesaid step of detecting 301 the first unique identifier ID1 stored in the radio frequency electronic device 2 comprises the further steps of:
- detecting the existence of radio frequency electronic devices 2 near to the first portable electronic apparatus 20;
- checking that the first unique identifier ID1 of the radio frequency electronic device 2 detected is a six-digit code.

In an advantageous embodiment, the method further comprises the steps of:
- registering the first unique identifier ID1 detected at a first instant t1 in a respective memory of the first portable electronic apparatus 20;
- comparing said first unique identifier ID1 registered with at least one further first unique identifier ID1 detected at an instant subsequent to said first instant t1.

Thereby, the method 300 prevents the first portable electronic apparatus 20 from sending the first signal S1 again while the partially sighted person is already listening to the audio message related to the same identifier.
This allows to reduce the battery consumption of the portable reading apparatus 20.

In an embodiment, the method 300 further comprises the steps of:
- generating, by means of the first portable electronic apparatus 20, a second message m2 including a datum data representative of the charge level of a battery of the first portable electronic apparatus 20 and acceleration data detected by a gyroscope/accelerometer module 26 which equips the first portable electronic apparatus 20;
- transmitting by radio broadcasting, by means of the first portable electronic apparatus 20, the first signal S1 including said first message m1 and said second message m2;
- receiving, by means of the second portable electronic apparatus 30, said first signal S1 with the related messages m1 and m2;
- processing, by means of the second portable electronic apparatus 30, the second message m2 received to extract the datum representative of the charge level of the battery of the first portable electronic apparatus 20 and the acceleration data;
- updating the information provided by the second portable electronic apparatus 30 on the charge level of the battery of the first portable electronic apparatus 20.

Also in this case, the step of transmitting, by radio broadcasting, the first signal S1 is performed with a frequency of 4 times per second.

In an embodiment, the method 300 comprises a step of starting-up a paused state of the duration of 250 msec for the second portable electronic apparatus 30 in case the abovementioned selecting step 307 has a negative outcome.
Also in this case, the method ensures a battery saving by the smartphone 30.

As shown above, the method 300 and the system 1000 for providing audio information to a partially sighted or blind person using radio frequency electronic devices for data transmission of the invention has numerous advantages.

In particular, the method 300 does not require a mutual recognition, i.e., pairing, process to connect and make the transmitting 20 and receiving 30 electronic apparatuses communicate with each other.

Furthermore, the suggested electronic system 1000 has the advantage of being of reduced complexity with respect to the known solutions and improves the recognition of items by partially sighted or blind persons in a determined environment.

Those skilled in the art, in order to satisfy contingent needs, may modify and adapt the embodiments of a system and method described above, and replace elements with others which are functionally equivalent, without departing from the scope of the following claims. Each of the features described as belonging to a possible embodiment may be achieved irrespective of the other embodiments described.

## Claims

1. A method (300) for providing audio information to a partially sighted or blind person using radio frequency electronic devices for data transmission of an electronic system (1000), said system comprising:
- one or more identification devices (10) fastened to items accommodated in an environment, wherein each identification device comprises a radio frequency electronic device (2) for data transmission;
- a first portable electronic apparatus (20) configured to query the radio frequency electronic device (2) of said one or more identification devices (10);
- a second portable electronic apparatus (30) configured to communicate with said first portable electronic apparatus (20) by means of a wireless communication network,
the method comprising the steps of:
- detecting (301), by means of the first portable electronic apparatus (20), a first unique identifier (ID1) stored in the radio frequency electronic device (2) and representative of an item accommodated in the environment;
- sending (302) to the partially sighted or blind person, by means of the first portable electronic apparatus (20), a notification signal of the successful detection of the radio frequency electronic device (2);
- generating (303), by means of the first portable electronic apparatus (20), a first message (m1) including said first unique identifier (ID1) detected and a second unique identifier (ID2) representative of said first portable electronic apparatus (20);
- transmitting (304) by radio broadcasting, by means of the first portable electronic apparatus (20), a first signal (S1) including said first message (m1);
- receiving (305), by means of the second portable electronic apparatus (30), the first message (m1) transmitted with the first signal (S1);
- processing (306), by means of the second portable electronic apparatus (30), the first message (m1) received to extract said first unique identifier (ID1) and second unique identifier (ID2);
- selecting (307) a first audio information representative of the item accommodated in the environment, starting from the first unique identifier (ID1) extracted, said first audio information being stored in a memory unit operatively associated with the second portable electronic apparatus (30);
- in case said selecting step has a positive outcome, providing (308) to the partially sighted or blind person said first audio information by means of the second portable electronic apparatus (30).

2. A method (300) for providing audio information to a partially sighted or blind person according to claim 1, wherein said first audio information is stored in a memory unit of the second portable electronic apparatus (30) and said step of selecting (307) the first audio information on the basis of the first unique identifier (ID1) extracted is performed by the second portable electronic apparatus (30).

3. A method (300) for providing audio information to a partially sighted or blind person according to claim 1, wherein the electronic system (1000) further comprises a server apparatus operating as cloud computing and connected to the second portable electronic apparatus (30) by means of a telematic network, and wherein said first audio information is stored in a first memory unit of the server apparatus and said step of selecting (307) the first audio information on the basis of the first unique identifier (ID1) extracted is performed by the server apparatus.

4. A method (300) for providing audio information to a partially sighted or blind person according to claim 1, further comprising, before the step of receiving (305) the first signal (S1), a step of enabling, by means of the second portable electronic apparatus (30), a dedicated wireless communication channel with the first portable electronic apparatus (20) on the basis of a selection of the second unique identifier (ID2) representative of said first portable electronic apparatus (20).

5. A method (300) for providing audio information to a partially sighted or blind person according to claim 1, wherein said step of detecting (301) the first unique identifier (ID1) stored in the radio frequency electronic device (2) comprises the further steps of:
- detecting the existence of radio frequency electronic devices (2) near to the first portable electronic apparatus (20);
- checking that the first unique identifier (ID1) of the radio frequency electronic device (2) detected is a six-digit code.

6. A method (300) for providing audio information to a partially sighted or blind person according to claim 1, wherein said notification signal of the successful detection of the radio frequency electronic device (2), sent to the partially sighted or blind person, is a mechanical vibration of the first portable electronic apparatus (20).

7. A method (300) for providing audio information to a partially sighted or blind person according to claim 1, further comprising the steps of:
- registering the first unique identifier (ID1) detected at a first instant (t1) in a respective memory of the first portable electronic apparatus (20);
- comparing said first unique identifier (ID1) registered with at least one further first unique identifier (ID1) detected at an instant subsequent to said first instant.

8. A method (300) for providing audio information to a partially sighted or blind person according to claim 1, further comprising the steps of:
- generating, by means of the first portable electronic apparatus (20), a second message (m2) including a datum representative of the charge level of a battery of the first portable electronic apparatus (20) and acceleration data detected by a gyroscope/accelerometer module (26) which equips the first portable electronic apparatus (20) ;
- transmitting by radio broadcasting, by means of the first portable electronic apparatus (20), the first signal (S1) including the first message (m1) and said second message (m2);
- receiving, by means of the second portable electronic apparatus (30), said second message (m2) transmitted with the first signal (S1);
- processing, by means of the second portable electronic apparatus (30), the second message (m2) received to extract the datum representative of the charge level of the battery of the first portable electronic apparatus (20) and acceleration data;
- updating the information provided by the second portable electronic apparatus (30) on the charge level of the battery of the first portable electronic apparatus (20).

9. A method (300) for providing audio information to a partially sighted or blind person according to claim 1 or 8, wherein said step of transmitting (304), by radio broadcasting, the first signal (S1) is performed with a frequency of 4 times per second.

10. A method (300) for providing audio information to a partially sighted or blind person according to claim 1, further comprising the step of starting-up a 250 msec paused state for said second portable electronic apparatus (30) in case said selecting step (307) has a negative outcome.

11. A method (300) for providing audio information to a partially sighted or blind person according to claim 1, wherein said radio frequency electronic device is a label or a tag (2) of the RFID or NFC type.

12. A method (300) for providing audio information to a partially sighted or blind person according to claim 1, wherein said first portable electronic apparatus (20) may be worn by the partially sighted or blind person and is selected from the group consisting of: a ring worn on a finger used for tactile reading, a glove, a smartwatch.

13. A method (300) for providing audio information to a partially sighted or blind person according to claim 1, wherein said second portable electronic apparatus (30) is selected from the group consisting of: smartphone, tablet, audio guide.

14. An electronic system (1000) for providing audio information to a partially sighted or blind person, comprising:
- one or more identification devices (10) fastened to items accommodated in an environment, wherein each identification device comprises a radio frequency electronic device (2) for data transmission;
- a first portable electronic apparatus (20) configured to query the radio frequency electronic device (2) of said one or more identification devices (10);
- a second portable electronic apparatus (30) configured to communicate with said first portable electronic apparatus (20) by means of a wireless communication network,
said system being configured to perform the method according to at least one of claims 1-13.
